# EUROPÄISCHE PATENTSCHRIFT

(11) **EP 0 975 079 B1**
(45) Veröffentlichungstag und Bekanntmachung des Hinweises auf die Patenterteilung: **26.01.2011**
(21) Anmeldenummer: 99113506.2
(22) Anmeldetag: 02.07.1999
(51) Int. Cl.: H02G 3/10, H02G 3/18, H02B 1/052

(54) **Installationsverteiler**
Electrical installation distributor
Distributeur d'installation électrique

(30) Priorität: 22.07.1998 DE 19832909
(43) Veröffentlichungstag der Anmeldung: 26.01.2000
(73) Patentinhaber: ABB AG, 68309 Mannheim (DE)
(72) Erfinder: Mössner, Gerhard, Dipl.-Ing., 74931 Lobbach (DE); Werner, Karl Thomas, 68753 Wiesenthal (DE); Flohr, Peter, Dipl.-Ing., 55128 Mainz (DE)
(74) Vertreter: Miller, Toivo

(56) Entgegenhaltungen:
- EP-A- 0 109 881
- DE-U- 29 621 560

## Beschreibung

Die Erfindung betrifft einen elektrischen Installationsverteiler nach dem Oberbegriff des Anspruches 1.

Es sind Installationsverteiler der eingangs genannten Art bekannt geworden, die z. B. in Hausinstallationsanlagen oder Gebäudeinstallationsanlagen eingebaut sind, die die zum Gebäude führende Zuleitung auf einzelne Verbraucher-Netzstromkreise im Gebäude verteilen. Dabei werden in den Verteiler Installationsgeräte eingesetzt und mit der Zuleitung und den Abgangsleitungen zu den Netzstromkreisen verbunden, was durch eine interne Verdrahtung erfolgt, wodurch die einzelnen Netze z. B. abgesichert werden bzw. ggf. abgeschaltet werden können.

Gleichartige Installationsgeräte wie z. B. Leitungsschutzschalter, Fehlerstromschutzschalter, Hauptschalter oder dgl. werden nebeneinander auf Tragschienen, die normalerweise Hutprofiltragschienen sind, aufgereiht und eingangsseitig mittels einer Sammelschienenanordnung verbunden, so daß die Installationsgeräte eingangsseitig miteinander gekoppelt sind und auf gleichem Potential liegen, wobei dies ein- oder mehrphasig erfolgen kann. An diesen Sammelschienen ist dann die Zuleitung zu dem Installationsverteiler angeschlossen.

Die Abgangsseiten der Installationsgeräte werden mit Verbindungsleitern auf Abgangsklemmen gelegt, an denen die einzelnen Ableitungen zu den Netzen angeschlossen sind.

Die derzeitige Tendenz geht dahin, die Verbindungen steckbar auszubilden. So ist z. B. ein Installationsverteiler bekannt geworden, bei dem die Zugangsseite der Installationsgeräte mit Steckfahnen an ihrer Unterseite ausgerüstet ist, die in Steckfahnenaufnahmekontakte an Sammelschienen eingesteckt werden können, was während des Aufschnappens der Installationsgeräte auf die Tragschiene erfolgt. Die einzelnen Sammelschienen befinden sich dabei in einem Gehäuse, welches unterhalb der Tragschiene angeordnet ist.

Aus dem DE 296 21 560 U1 ist bekannt, die Ableitungen ebenfalls steckbar auszubilden.

Aus der EP-A-0 109 881 ist ein Instalfationsverteiler gemäß dem Oberbegriff des AnspruCits 1 bekannt. Zum Abschließen der Ableitungen sind dabei in dem Installationsverteiler eine Reihe von Abgangsklemmen vorgesehen, die einerseits mit den internen Leitungsführungen zu den lnstallationsgeräten verbunden sind, und in die andererseits die Abgangsleiter eingeführt werden können. Es handelt sich dabei um standardmäßig verfügbare Klemmenbausteine, in die beliebige Abgangsleiter bis zu einem, durch den Klemmendurchmesser begrenzten, maximalen Durchmesser eingeführt werden können.

Bei allen diesen bekannten Installationsverteilern besteht das Problem, daß Fehlinstallationen nicht auszuschließen sind. Es kann z. B. vorkommen, daß z. B. ein Feuchtraum, der mit einem Fehlerstromschutzschalter abzusichern ist irrtümlich an einen Leitungsschutzschalter angeschlossen wird, so daß die Absicherung des Feuchtraumes nicht gewährleistet ist, und dgl.

Aufgabe der Erfindung ist es, einen Installationsverteiler zu schaffen, bei dem Fehlanschlüsse vermieden sind.

Diese Aufgabe wird erfindungsgemäß durch die kennzeichnenden Merkmale des Anspruches 1 gelöst.

Erfindungsgemäß also sind die in den Verteiler eingeführten Abgangsleitungen je nach bestimmter vorgeschriebener Absicherung codiert, so dass sichergestellt ist, dass die Netzstromkreise nur mit ihren zugehörigen Installationsgeräten verbindbar sind.

Mit den internen Leitungszügen werden die einzelnen Installationsgeräte mit den bestimmten Anschlußstellen für die Abgangsleitungen verbunden, und mit diesen Anschlußstellen können dann ebenfalls wieder nur solche Abgangsleitungen verbunden werden, die jeweils zu einem Netzstromkreis führen, das mit dem betreffenden vorgeschriebenen Installationsgerät abgesichert werden muß: z. B. ist die Abgangsleitung für einen Feuchtraumnetzstromkreis (Badezimmer) so codiert, daß sie nur dort angeschlossen werden kann, wo sich ein Fehlerstromschutzschalter anschließt. Dadurch wird schon bei der Montage der Installationsverteiler und bei der Bestückung verhindert, daß ein Netzstromkreis, der z. B. mit einem Fehlerstromschutzschalter abzusichern ist, fälschlicherweise an einen Leitungsschutzschalter angeschlossen wird.

In einer besonders vorteilhaften Ausführungsform der Erfindung können die Installationsgeräte zusätzlich eine Montiercodierung aufweisen, die einer Montagecodierung an dem Montageplatz in dem Installationsverteiler angepasst ist. So wird erreicht, dass bestimmte jeweilige Leitungsschutzschalter oder Fehlerstromschutzschalter nur an dafür vorgesehenen Montageplätzen eingebaut werden können.

Die internen Leitungszüge können durch einen Stromschienensystem gebildet sein, das aus einzelnen Abschnitten zusammengesetzt ist, und an denen Anschlußelemente ebenfalls durch Stecken angeschlossen werden können.

Die erfindungsgemäße Installationsverteilung kann betreffend Innenverdrahtung damit fabrikseitig hergestellt und bestückt werden, so daß der Installateur vor Ort nur noch die Installationsgeräte zu montieren, d. h. auf die Tragschienen aufzurasten, und die Verrohrungen unter Putz befindlichen, beim Ausbau des Gehäudes schon verlegten Anschluß- bzw. Ab- bzw. Zuleitungen zu clen-einzernen Netzstromkreisen, auch Nezleiter genannt, mit den codierten Anschluß- und Verbindungselementen zu versehen braucht.

Weitere vorteilhafte Ausgestaltungen der Erfindung sind den weiteren Unteransprüchen zu entnehmen.

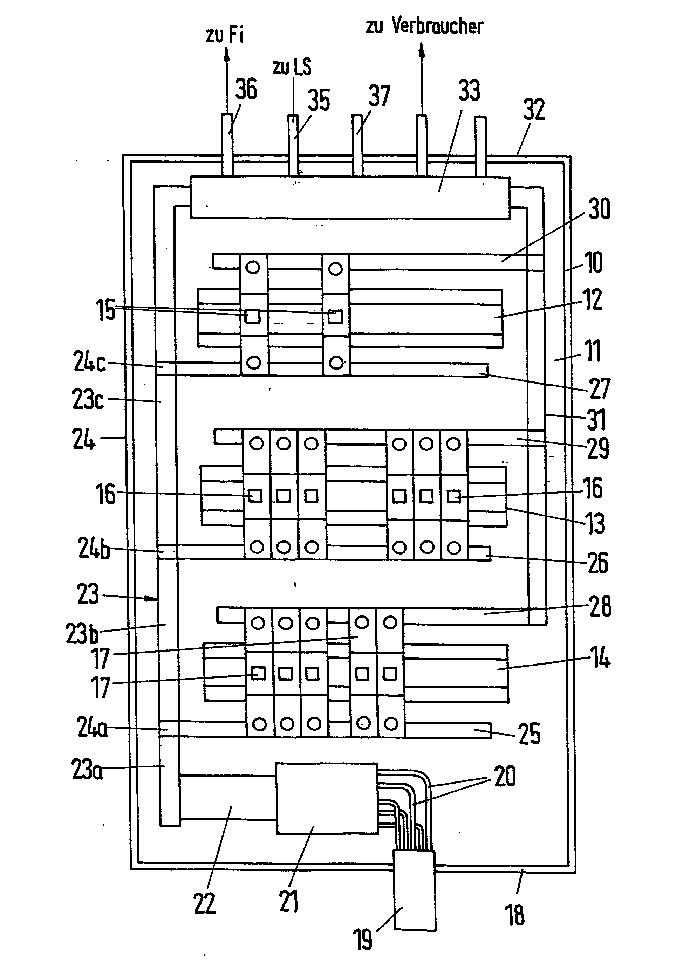

Anhand der Zeichnung, in der ein Ausführungsbeispiel der Erfindung dargestellt ist, sollen die Erfindung, sowie weitere vorteilhafte Ausgestaltungen und Verbesserungen der Erfindung näher erläutert und beschrieben werden.

Es zeigt die einzige Fig, eine Einsicht in einen erfindungsgemäßen Installationsverteiler.

Der erfindungsgemäße Installationsverteiler besitzt ein napfförmiges Installationsgehäuse 10 (in folgendem kurz auch Gehäuse 10 genannt), das mittels einer nicht näher dargestellten Tür nach vorne hin abgedeckt und abgeschlossen werden kann. Am Boden 11 des Gehäuses 10 befinden sich Hutprofilschienen 12, 13 und 14, auf denen Installationsgeräte aufgeschnappt sind, wobei auf der Hutprofilschiene 12 beispielsweise einpolige Leitungsschutzschalter 15, auf der Hutprofilschiene 13 dreipolige Leitungsschutzschalter 16 und auf der Hutprofilschiene 14 Fehlerstromschutzschalter 17 aufgeschnappt sind. In die untere Gehäuseseitenwand 18 ist ein Zugangskabel 19 eingeführt, dessen einzelne Adern 20 einem steckbaren Adapter 21 auf einer Seite zugeführt werden, von dessen anderer Seite ein geeigneter Schienenblock 22 für drei Phasen und ggf. einen PEN- und N-Leiter abgehen, die mittels einer geeigneten Stecktechnik mit einer Sammelschienenanordnung 23 in Verbindung stehen, die parallel zu der linken Seitenwand 24 und senkrecht zur Wand 18 in der Nähe der Seitenwand 24 nach oben geführt sind. Die Sammelschienenanordnung 23 ist hier zusammengesetzt aus vormontierten Einheiten 23a, 23b und 23c, die mit steckbaren Zwischenstücken 24a, 24b und 24c miteinander gekoppelt werden und von denen aus parallel zu den einzelnen Hutprofilschienen Zugangssammelschienen 25, 26 und 27 abgehen, die zu den einzelnen Installationsgeräten 15, 16, 17 die Energie leiten und mit den Eingangsklemmten der Installationsgeräte 15 bis 17 verbunden sind. Dabei kann die Sammelschiene 27 eine Einzelsammelschiene sein, weil an dieser Sammelschiene 27 einpolige Leitungsschutzschalter 15 angeschlossen sind; die Sammelschiene 26 ist eine mehrpolige Sammelschiene, entsprechend der Anzahl der Pole der Leitungsschutzschalter 16, und die Sammelschiene 25 ist entsprechend ausgebildet, um die Fehlerstromschutzschalter 17 anschließen zu können. Die einzelnen Schienen sind dabei als Flachschienen ausgebildet, die in geeignete Gehäuse oder in Kunststoff eingebettet sind, so daß die Sammelschienenanordnungen 23a, 23b und 23c gebildet werden. Die Sammelschienen 26 und 25 entsprechen dann den üblichen sog. Sammelschienenblöcken, wobei diese Phasensammelschienenblöcke 25, 26 und 27 steckbar ausgebildet sind, so daß sie über die Zwischenstücke 24a, 24b und 24c mit den Schienen bzw. Leitern der Sammelschienenanordnung 23 verbunden werden können.

In entsprechender Weise verlaufen parallel zu den Hutprofilschienen 12, 13 und 14 Abgangssammelschienen 28, 29 und 30, die mit einer zweiten Sammelschienenanordnung 31 in gleicher Weise verbunden sind wie die Sammelschienen 25 bis 27 mit der Sammelschienenanordnung 23, so daß dies hier nicht näher beschrieben werden soll.

Das obere Ende, d. h. das Ende der Sammelschienenanordnung 31, das der Wand 18 entgegengesetzt liegt und in die Nähe der oberen Wand 32 vorspringt, ist mit einem Verteiler 33 verbunden, in dem in nicht näher dargestellter Weise einzelne Leiter in Form von Flachbandleitern eingebettet sind, die entsprechende Anschlußkontaktstücke besitzen, die entsprechend der Verwendung bzw. entsprechend dem verbundenen Installationsgerät codiert sind. An diese einzelnen codierten Anschlußteilen oder Anschlußklemmen sind Anschlußleiter 35, 36, 37... anschließbar, die zu ganz bestimmten Verbrauchern führen: so führt die Verbindungsleitung oder Abgangsleitung 35 zu einem Verbraucher, der mit einem Leitungsschutzschalter abzusichern ist, wogegen die Leitung 36 zu einem Verbraucher führt, der mit einem Fehlerstromschutzschalter abgesichert werden muß. Dieser Verbraucher, der mit einem Fehlerstromschutzschalter abgesichert werden muß, wird, wenn die Anschlußleitung oder Abgangsleitung 36 in den Verteiler 33 eingesteckt wird, automatisch und zwangsläufig mit einem der Fehlerstromschutzschalter 17 verbunden, wogegen der an dem Abgangsleiter 35 angeschlossene Verbraucher zwangsläufig mit einem der Leitungsschutzschalter 15 verbunden ist. Der Abgangsleiter 37 ist dann mit einem dreiphasigen Leitungsschutzschalter 16 verbunden, und die an den Abgangsleitern 37, 35 und 36 angebrachten Steckelemente sind für die entsprechenden Anschlußstücke in der Verteilerleiste 33 codiert, so daß beispielsweise der mit dem geeigneten Anschlußstecker versehene Abgangsleiter 36 nicht dort eingesteckt werden kann, wo der Leiter 35 oder 37 eingesteckt werden muß.

Dies bedeutet für den Installateur eine erhebliche Vereinfachung: er verlegt eine elektrische Leitung zu einem mit einem Fehlerstromschutzschalter abzusichernden Verbraucher, nämlich die Leitung 36, und klemmt am verteilerseitigen Ende des Abgangsleiters 36 eine entsprechend codierte Anschlußklemme oder Anschlußklemmenstift an; dann, wenn der Installationsverteiler 10 montiert ist, kann der Anschlußleiter 36 nur an diejenige entsprechend passende Stelle angesteckt oder eingefügt werden, die zu einem Fehlerstromschutzschalter 17 führt.

Eine weitere vorteilhafte Ausgestaltung der Erfindung besteht dann darin, daß die einzelnen einpoligen Leitungsschutzschalter 15 ebenfalls eine Befestigungscodierung besitzen, dergestalt, daß die einpoligen Leitungsschutzschalter 15 nur auf die Hutprofilschiene 12 aufschnappbar sind, nicht aber auf die Hutprofilschienen 13 und 14. Das gleiche gilt auch für die mehrpoligen Leitungsschutzschalter 16 und die Fehlerstromschutzschalter 17. Wegen dieser entsprechenden Befestigungscodierungen kann ein mehrpoliger Leitungsschutzschalter 16 nicht auf der Hutprofilschiene 14 und nicht auf die Hutprofilschiene 12 aufgesetzt werden, die nämlich zur Befestigung und dem Aufschnappen uns von Fehlerstromschutzschaltern 17 und einpoligen Leitungsschutzschaltern 15 vorbehalten sind.

Der Adapter 21 ist als steckbarer Adapter vorgesehen und ausgebildet, so daß beim Entfernen des Adapters 21 zwischen den Leitungsadern 20 und der Sammelschienenanordnung 22 eine deutlich sichtbare Trennstrecke vorgesehen ist. Der Adapter 21 kann außerdem eine schaltbare Kontaktstelle enthalten, so daß der Adapter 21 gleichzeitig auch als Schalter ausgebildet ist.

## Patentansprüche

1. lnstallationsverteiler, mit einem nach vom abschließbaren Gehäuse (10), in dem elektrische Installationsgeräte (15, 16, 17), z.B. Fehlerstromschutzschalter, Leitungsschutzschalter und dgl., eingebaut sind, mit einer Zuleitung (19), mit Abgangsleitungen (36, 35, 37) zu einzelnen Netzstromkreisen, wobei einzelne Installationsgeräte den einzelnen Netzstromkreisen zu deren Absicherung, Steuerung und dgl. zugeordnet sind, und mit internen Leitungszügen (21, 22, 23, 24, 25 bis 30), die die Zuleitung (19) mit den Installationsgeräten (15, 16, 17) und die installationsgeräte (15, 16, 17) mit zugehörigen Abgangsleitungen (36, 35, 37) verbinden, wobei die einzelnen Installationsgeräte (15, 16, 17) an vorbestimmten Plätzen im Gehäuse (10) angeordnet sind, und dass diese mit den internen Leitungsführungen (21, 22, 23, 24, 25 bis 30) mit vorbestimmten Anschlussstellen verbunden sind, an denen nur die zu bestimmten, nach bestimmten Vorschriften abzusichernden Netzstromkreise gehörenden Abgangsleitungen (36, 35, 37) anschließbar sind, **dadurch gekennzeichnet, dass** die in den Verteiler eingeführten Abgangsleitungen (35 bis 37) je nach bestimmter vorgeschriebener Absicherung codiert sind, so dass sichergestellt ist, dass die Netzstromkreise nur mit ihren zugehörigen Installationsgeräten verbindbar sind.

2. Installationsverteiler nach Anspruch 1 , **dadurch gekennzeichnet, daß** die Installationsgeräte (15, 16, 17) eine Montiercodierung aufweisen, die einer Montagecodierung an dem Montageplatz im Installationsverteiler angepaßt ist, so daß eine Fehlbelegung durch nicht passende Installationsgeräte verhindert ist.

3. Installationsverteiler nach Anspruch 2, **dadurch gekennzeichnet, daß** die Montiercodierung jeweils für Leitungsschutzschalter (15, 16), Fehlerstromschutzschalter (17) und andere weitere Installationsgeräte, ggf. mit unterschiedlichen Stromwerten, unterschiedlich ist, so daß z. B. ein Fehlerstromschutzschalter nicht an einer Stelle montierbar ist, an der ein Leitungsschutzschalter vorgesehen ist.

4. Installationsverteiler nach einem der Ansprüche 1 bis 3, **dadurch gekennzeichnet, daß** die Installationsget-äte (15 bis 17) mit Steckanschlüssen versehen sind.

5. Installationsverteiler nach einem der vorherigen Ansprüche, **dadurch gekennzeichnet, daß** die Zugangsleitungen (19, 20) vom EVU in den Installationsverteiler auf eine Klemmleiste (21) gelegt sind, von der aus sie über vorgefertigte, fabrikseitig verlegte interne Leitungszüge (22, 23, 24, 25 bis 30) mit den einzelnen tnstattationsgeräten elektrisch leitend verbindbar sind.

6. Installationsverteiler nach Anspruch 5, **dadurch gekennzeichnet, daß** die Klemmleiste (21) zwei Anschlußstellen für jede interne Leitung aufweist, die mittels einer Verbindungskupplung miteinander verbindbar sind, so daß die Zuleitungen mit den vorverlegten internen Leitungszügen mittels der Klemmleiste elektrisch verbindbar sind.

7. Installationsverteiler nach Anspruch 6, **dadurch gekennzeichnet, daß** die Verbindungskupplung der Klemmleiste (21) eine Kupplungsbrücke ist.

8. Installationsverteiler nach Anspruch 7, **dadurch gekennzeichnet, daß** die Kupplungsbrücke steckbar ist.

9. Installationsverteiler nach einem der Ansprüche 6 bis 8, **dadurch gekennzeichnet, daß** in den jeweiligen Leitungsführungen der Kupplungsbrücke Sicherungselemente eingesetzt sind.

10. instaliationsverteiler nach Anspruch 9, **dadurch gekennzeichnet, daß** als Sicherungselemente Hauptschalter, Leitungsschutzschalter, Fehlerstromschutzschalter und/oder Überspannungsschutzelemente oder dgl. enthalten sind.

11. Installationsverteiler nach Anspruch 10, **dadurch gekennzeichnet, daß** die Sicherungselemente Strombegrenzer umfassen.

12. Installationsverteiler nach einem der Ansprüche 5 bis 11, **dadurch gekennzeichnet, daß** durch Entfernern der Kupplungsbrücke eine sichtbare Trennstrecket erzeugt ist.

13. Installationsverteilung nach einem der vorherigen Ansprüche, **dadurch gekennzeichnet, daß** die internen Leitungszüge (22, 23, 24, 25 bis 30) durch Leiterschienen gebildet sind

14. Installationsverteiler nach Anspruch 13, **dadurch gekennzeichnet, daß** die einzelnen Leiterschienen aus wenigstens einem Leiterteilstück (23a, 23b, 24b, 25b bis 30b) aufgebaut sind.

15. Installationsverteiler nach einem der vorherigen Ansprüche, **dadurch gekennzeichnet, daß** innerhalb des Verteilers auf einer Seite die Leiterteilstücke (23a, 23b, 24b, 25b bis 30b), die mit der Kupplungsbrücke verbunden sind, und auf der gegenüberliegenden Seite die mit den Installationsgeräten zu den einzelnen Netzen verbundenen Leiterteilstücke (31) angeordnet sind.

16. Installationsverteiler nach Anspruch 15, **dadurch gekennzeichnet, daß** die Leiterteilstücke (23a, 24a, 25a bis 30a, 31) durch Flachbandleiter gebildet sind.

17. Installationsverteiler nach Anspruch 16, **dadurch gekennzeichnet, daß** die Flachbandleiter zur isolierung in aushärtbares Material eingegossen sind.

18. Installationsverteiler nach Anspruch 17, **dadurch gekennzeichnet, daß** Anschlüsse an den Flachbandfeitern zur Verbindung mit Sammelschienen und zur Verbindung untereinander Steckanschlüsse sind.

## Claims

1. A distribution board, having a housing (10) closable on the front, in which electrical installation devices (15, 16, 17), e.g., ground fault circuit interrupters, circuit breakers, and the like, are installed, having a supply line (19), having output lines (36, 35, 37) to individual mains circuits, individual installation devices being assigned to the individual mains circuits for the securing, control, etc. thereof, and having internal cable runs (21, 22, 23, 24, 25 to 30), which connect the supply line (19) to the installation devices (15, 16, 17) and the installation devices (15, 16, 17) to associated output lines (36, 35, 37), the individual installation devices (15, 16, 17) being situated at predetermined places in the housing (10), and these are connected to the internal line guides (21, 22, 23, 24, 25 to 30) using predetermined connection points, at which only the intended output lines (36, 35, 37), which are associated with mains circuits to be secured according to established guidelines, are connectable, **characterized in that** the output lines (35 to 37) inserted into the board are coded depending on the established prescribed securing, so that it is ensured that the mains circuits are only connectable to their associated installation devices.

2. The distribution board according to Claim 1, **characterized in that** the installation devices (15, 16, 17) have an installation code, which is adapted to an installation code at the installation space in the distribution board, so that incorrect occupancy by non-matching installation devices is prevented.

3. The distribution board according to Claim 2, **characterized in that** the installation code is different in each case for circuit breakers (15, 16), ground fault circuit interrupters (17), and other types of installation devices, optionally having different current values, so that, for example, a ground fault circuit interrupter cannot be installed at a point at which a circuit breaker is provided.

4. The distribution board according to one of Claims 1 to 3, **characterized in that** the installation devices (15 to 17) are provided with plug connections.

5. The distribution board according to one of the preceding claims, **characterized in that** the access lines (19, 20) from the power company into the distribution board are laid on a terminal strip (21), from which they are electrically connectable via prefinished internal cable runs (22, 23, 24, 25 to 30), which are laid in the factory, to the individual installation devices.

6. The distribution board according to Claim 5, **characterized in that** the terminal strip (21) has two connection points for each internal line, which are connectable to one another using a connection coupling, so that the supply lines are electrically connectable to the pre-laid internal cable runs using the terminal strip.

7. The distribution board according to Claim 6, **characterized in that** the connection coupling of the terminal strip (21) is a coupling bridge.

8. The distribution board according to Claim 7, **characterized in that** the coupling bridge is pluggable.

9. The distribution board according to one of Claims 6 to 8, **characterized in that** securing elements are inserted into the respective line guides of the coupling bridge.

10. The distribution board according to Claim 9, **characterized in that** main switches, circuit breakers, ground fault circuit interrupters, and/or overvoltage protection elements or the like are contained as securing elements.

11. The distribution board according to Claim 10, **characterized in that** the securing elements comprise current limiters.

12. The distribution board according to one of Claims 5 to 11, **characterized in that** a visible air gap is created by removing the coupling bridge.

13. The distribution board according to one of the preceding claims, **characterized in that** the internal cable runs (22, 23, 24, 25 to 30) are formed by busbars.

14. The distribution board according to Claim 13, **characterized in that** the individual busbars are constructed from at least one lead part (23a, 23b, 24b, 25b to 30b).

15. The distribution board according to one of the preceding claims, **characterized in that**, within the board, the lead parts (23a, 23b, 24b, 25b to 30b) which are connected to the coupling bridge are situated on one side, and the lead parts (31) which are connected using the installation devices to the individual mains are situated on the opposite side.

16. The distribution board according to Claim 15, **characterized in that** the lead parts (23a, 24a, 25a to 30a, 31) are formed by flat strip leads.

17. The distribution board according to Claim 16, **characterized in that** the flat strip conductors are embedded in curable material for insulation.

18. The distribution board according to Claim 17, **characterized in that** connections on the flat strip leads for connection to busbars and for connection among one another are plug connections.

## Revendications

1. Tableau de distribution électrique pour installation avec un boîtier (10) pouvant être fermé sur l'avant, dans lequel sont intégrés des appareillages électriques d'installation (15, 16, 17), par exemple des disjoncteurs à courant de fuite, des disjoncteurs de protection de ligne, etc., avec une ligne d'arrivée (19), avec des lignes de sortie (36, 35, 37) vers différents circuits de courant de réseau, différents appareillages d'installation étant associés aux différents circuits de courant de réseau pour la protection et la commande de ceux-ci et autres, et avec des longueurs de lignes internes (21, 22, 23, 24, 25 à 30) qui relient la ligne d'arrivée (19) aux appareillages d'installation (15, 16, 17) et les appareillages d'installation (15, 16, 17) aux lignes de sortie (36, 35, 37) correspondantes, dans lequel les différents appareillages d'installation (15, 16, 17) sont disposés à des emplacements prédéterminés dans le boîtier (10) et reliés aux tracés de lignes internes (21, 22, 23, 24, 25 à 30) à des points de raccordement prédéterminés auxquels ne peuvent être connectés que les lignes de sortie (36, 35, 37) appartenant à certains circuits de courant de réseau devant être protégés selon des instructions déterminées, **caractérisé en ce que** les lignes de sortie (35 à 37) introduites dans le tableau de distribution électrique sont codées en fonction de la protection précise prescrite, de façon à assurer que les circuits de courant de réseau ne puissent être raccordés qu'aux appareillages d'installation qui leur correspondent.

2. Tableau de distribution électrique pour installation selon la revendication 1, **caractérisé en ce que** les appareillages d'installation (15, 16, 17) présentent un codage de montage adapté à un codage de montage sur l'emplacement de montage dans le tableau de distribution électrique pour installation, de façon à empêcher une erreur de branchement d'appareillages d'installation inadéquats.

3. Tableau de distribution électrique pour installation selon la revendication 2, **caractérisé en ce que** le codage de montage est différent pour les disjoncteurs de protection de ligne (15, 16), les disjoncteurs à courant de fuite (17) et d'autres appareillages d'installation, ayant éventuellement des valeurs d'intensité différentes, de sorte qu'un disjoncteur à courant de fuite, par exemple, ne peut pas être monté à un emplacement prévu pour un disjoncteur de protection de ligne.

4. Tableau de distribution électrique pour installation selon l'une des revendications 1 à 3, **caractérisé en ce que** les appareillages d'installation (15 à 17) sont munis de raccords enfichables.

5. Tableau de distribution électrique pour installation selon l'une des revendications précédentes, **caractérisé en ce que** les lignes d'arrivée (19, 20) du réseau du fournisseur d'électricité sont posées dans le tableau de distribution électrique d'installation sur une barrette à bornes (21) à partir de laquelle elles peuvent être connectées de façon électriquement conductrice aux différents appareillages d'installation par des longueurs de lignes internes (22, 23, 24, 25 à 30) préfabriquées et posées en usine.

6. Tableau de distribution électrique pour installation selon la revendication 5, **caractérisé en ce que** la barrette à bornes (21) présente deux points de raccordement pour chaque ligne interne, qui peuvent être reliés entre eux au moyen d'un coupleur de liaison de telle façon que les lignes d'arrivée puissent être reliées électriquement aux lignes internes pré-posées au moyen de la barrette à bornes.

7. Tableau de distribution électrique pour installation selon la revendication 6, **caractérisé en ce que** le coupleur de liaison de la barrette à bornes (21) est un pont de couplage.

8. Tableau de distribution électrique pour installation selon la revendication 7, **caractérisé en ce que** le pont de couplage est enfichable.

9. Tableau de distribution électrique pour installation selon l'une des revendications 6 à 8, **caractérisé en ce que** des éléments de protection sont insérés dans les tracés des lignes du pont de couplage.

10. Tableau de distribution électrique pour installation selon la revendication 9, **caractérisé en ce que** les éléments de protection contenus sont des disjoncteurs principaux, des disjoncteurs de protection de ligne, des disjoncteurs à courant de fuite et/ou des éléments parasurtenseurs.

11. Tableau de distribution électrique pour installation selon la revendication 10, **caractérisé en ce que** les éléments de protection comprennent des limiteurs d'intensité.

12. Tableau de distribution électrique pour installation selon l'une des revendications 5 à 11, **caractérisé en ce que** le retrait du pont de couplage crée un trajet de sectionnement visible.

13. Tableau de distribution électrique pour installation selon l'une des revendications précédentes, **caractérisé en ce que** les longueurs de lignes internes (22, 23, 24, 25 à 30) sont formées par des barres conductrices.

14. Tableau de distribution électrique pour installation selon la revendication 13, **caractérisé en ce que** les différentes barres conductrices sont constituées d'au moins une partie de conducteur (23a, 23b, 24b, 25b à 30b).

15. Tableau de distribution électrique pour installation selon l'une des revendications précédentes, **caractérisé en ce qu'**il est prévu à l'intérieur du tableau de distribution électrique, d'un côté, les parties de conducteur (23a, 23b, 24b, 25b à 30b) qui sont connectées au pont de couplage, et du côté opposé, les parties de conducteur (31) reliées aux appareillages d'installations des différents réseaux.

16. Tableau de distribution électrique pour installation selon la revendication 15, **caractérisé en ce que** les parties de conducteur (23a, 24a, 25a à 30a, 31) sont formées par des conducteurs plats en ruban.

17. Tableau de distribution électrique pour installation selon la revendication 16, **caractérisé en ce que** les conducteurs plats en ruban sont enrobés de matériau durcissable pour leur isolation.

18. Tableau de distribution électrique pour installation selon la revendication 17, **caractérisé en ce que** les raccordements sur les conducteurs plats en ruban pour la liaison avec les barres omnibus et leur liaison entre eux sont des raccords enfichables.
